# EUROPÄISCHE PATENTANMELDUNG

(11) **EP 1 962 166 A1**
(43) Veröffentlichungstag der Anmeldung: **27.08.2008**
(21) Anmeldenummer: 08002380.7
(22) Anmeldetag: 08.02.2008
(51) Int. Cl.: G05D 23/13, F01P 7/16

(54) **Integralthermostat**

(30) Priorität: 13.02.2007 DE 102007008186
(71) Anmelder: Behr Thermot-tronik GmbH, 70806 Kornwestheim (DE)
(72) Erfinder: Kovacs, Thomas, 74336 Brackenheim (DE)
(74) Vertreter: Patentanwälte Ruff, Wilhelm, Beier, Dauster & Partner

(57) **Zusammenfassung**

Die Erfindung betrifft einen Integralthermostaten umfassend einen Thermostatdeckel (2) und ein darin eingesetztes Thermostatventil (3), wobei der Thermostatdeckel (2) einen gestuften Anschlussflansch (20) zur Anbindung an ein Gehäuse aufweist, ein Dichtungsring (4) an einer radialen Außenwand (21) einer Stufe des Anschlussflanschs (20) anbringbar ist, das Thermostatventil (3) ein Halteelement (35, 135) aufweist, mittels welchem es an dem Anschlussflansch (20) anbringbar ist, das Halteelement (35, 135) an einer an die radiale Außenwand (21) anschließenden Abschlussfläche (22, 122) des Anschlussflansches (20) mindestens teilweise flächenbündig anliegt und das Halteelement (35, 135) die Abschlussfläche (21) in Radialrichtung (R) zumindest teilweise überragt, so dass ein angebrachter Dichtungsring (4) in Axialrichtung zwischen dem Anschlussflansch (20) und dem Halteelement (35, 135) sicherbar ist.

Die Erfindung betrifft weiter ein Verfahren zur Herstellung eines Integralthermostaten.

## Beschreibung

Die Erfindung betrifft einen Integralthermostaten umfassend einen Thermostatdeckel und ein darin eingesetztes Thermostatventil. Die Erfindung betrifft weiter ein Verfahren zur Herstellung eines derartigen Integralthermostaten.

Thermostaten dienen einer Temperaturregelung, beispielsweise zur Regelung einer Motortemperatur eines Kraftfahrzeugs. Als Integralthermostaten werden dabei Baugruppen bezeichnet, welche direkt an ein Gehäuse, beispielsweise ein Motorgehäuse angebracht werden. Beim Anbringen des Integralthermostaten an dem Gehäuse ist es notwendig, eine Dichtung zwischen dem Integralthermostaten und dem Gehäuse vorzusehen.

Es ist beispielsweise aus der DE 94 12 727 U1 bekannt, ein Thermostatventil in einen Thermostatdeckel einzusetzen, so dass ein Integralthermostat als vormontierte Baugruppe für eine Montage geschaffen wird. Der Thermostatdeckel weist dabei einen gestuften Anschlussflansch zur Anbringung an das Gehäuse auf, wobei ein Dichtungsring unter elastischer Aufweitung an einer Außenwand einer inneren Stufe des Anschlussflansches anbringbar ist. Der Thermostatdeckel weist Laschen auf, welche mit einem an dem Thermostatventil vorgesehenen Bügel zusammenwirken, um eine gemeinsame Baugruppe zu bilden.

Es besteht jedoch die Gefahr, dass sich der Dichtungsring von der vormontierten Baugruppe löst und bei der Montage an das Gehäuse fehlt. Es ist daher beispielsweise aus der genannten DE 94 12 727 U1 bekannt, eine Ringnut in dem Deckel vorzusehen, in welche der Dichtungsring einsetzbar ist. Eine derartige Ringnut kann nachträglich in den beispielsweise durch Spritzguss hergestellten Thermostatdeckel eingearbeitet werden. Daneben ist es auch möglich, die Nut bereits in einem Werkzeug zur Herstellung des Thermostatdeckels vorzusehen. Ein entsprechendes Werkzeug ist jedoch teuer in der Herstellung.

Es ist weiter bekannt, an der radialen Außenwand einer Stufe des Anschlussflansches eine Nut vorzusehen, in welche ein Dichtungsring einsetzbar ist, so dass er in Axialrichtung gehalten wird. Eine derartige "Radialnut" schafft jedoch einen sogenannten Hinterschnitt bezogen auf eine Hauptachse des Thermostatdeckels. Eine Spritzgussherstellung eines derartigen Deckels ist daher nur durch eine aufwändige Werkzeuggestaltung und längere Zykluszeiten beim Einspritzen möglich. Zudem ist es bei Hinterschnitten notwendig, ein zugehöriges Werkzeug in mindestens zwei Teilen auszuführen, wobei an Berührungsflächen und/oder -kanten beim Spritzgießen ein Grat entsteht. Aufgrund dieses Grats besteht die Gefahr einer Beschädigung des Dichtungsrings.

Es ist Aufgabe der vorliegenden Erfindung, ein Integralthermostat umfassend einen Thermostatdeckel und ein Thermostatventil zu schaffen, welcher eine Verliersicherung für einen Dichtungsring aufweist und welcher einfach und kostengünstig herstellbar ist. Es ist weiter Aufgabe der Erfindung, ein Verfahren zur Herstellung eines derartigen Integralthermostaten zu schaffen.

Diese Aufgabe wird gelöst durch einen Integralthermostaten umfassend einen Thermostatdeckel mit einem gestuften Anschlussflansch zur Anbindung an ein Gehäuse und ein in den Thermostatdeckel eingesetztes Thermostatventil, wobei ein Dichtungsring an einer radialen Außenwand einer Stufe des Anschlussflanschs anbringbar ist, das Thermostatventil ein Halteelement aufweist, mittels welchem es an dem Thermostatdeckel befestigbar ist, das Halteelement an einer an die radiale Außenwand anschließenden Abschlussfläche des Anschlussflansches mindestens teilweise flächenbündig anliegt und das Halteelement die Abschlussfläche in Radialrichtung zumindest teilweise überragt, so dass ein angebrachter Dichtungsring in Axialrichtung zwischen dem Anschlussflansch und dem Halteelement sicherbar ist.

An dem vormontierten Integralthermostaten ist somit ein Dichtungsring, insbesondere ein O-Ring, in Axialrichtung zwischen dem Thermostatdeckel und dem Thermostatventil sicherbar. Dabei kann der Thermostatdeckel ohne Hinterschnitte oder dergleichen kostengünstig als Kunststoffspritzteil oder aus Metall hergestellt werden. Das Halteelement ist beispielsweise als Blechpressteil gefertigt. Das Halteelement und der Thermostatdeckel sind kraft- und/oder formschlüssig in einer Vormontage miteinander verbunden.

In einer Ausgestaltung der Erfindung weisen das Halteelement und der Thermostatdeckel komplementäre Rastmittel auf. Durch die Rastmittel ist eine einfache Vormontage des Integralthermostaten möglich. Durch geeignete Gestaltung der Rastmittel ist der Integralthermostat zerstörungsfrei demontierbar, so dass beispielsweise ein eingesetzter Dichtungsring ersetzbar ist.

In einer weiteren Ausgestaltung der Erfindung ist das Halteelement eine Grundplatte, welche einen Ventilsitz für einen Ventilteller des Thermostatventils bildet. Die Grundplatte ist in einer Ausgestaltung der Erfindung einteilig mit einem Abstützelement ausgeformt, gegen welches sich ein Arbeitskolben des Thermostatventils abstützt. In einer anderen Ausgestaltung dient der Ventilteller als Abstützelement für den Arbeitskolben.

In Weiterbildung der Erfindung ist die Grundplatte ringscheibenförmig ausgestaltet. Die ringscheibenförmige Grundplatte weist dabei einen Außendurchmesser auf, welcher größer ist als der Außendurchmesser der Außenwand, auf welcher der Dichtungsring aufgebracht werden kann, so dass ein Überstand geschaffen wird. Dabei genügt ein geringer Überstand von beispielsweise 5 - 40% der Breite des Dichtungsrings. In anderen Ausgestaltungen kann jedoch auch ein größerer Überstand vorgesehen werden.

In einer weiteren Ausgestaltung der Erfindung ist das Haltemittel als Haltetraverse ausgeformt. Bei einer Ausgestaltung der Haltetraverse, auch als Halteclip bezeichnet, stützt sich der Arbeitskolben des Thermostatventils gegen den Thermostatdeckel ab und der Thermostatdeckel fungiert auch als Ventilsitz. Die Haltetraverse dient dabei lediglich einer Befestigung des Thermostatventils an dem Thermostatdeckel zur Bildung des Integralthermostaten.

Die Erfindung betrifft weiter ein Verfahren zur Herstellung eines Integralthermostaten umfassend einen Thermostatdeckel und ein darin eingesetztes Thermostatventil, wobei der Thermostatdeckel einen gestuften Anschlussflansch mit einer radialen Außenwand und einer an die radiale Außenwand anschließenden Abschlussfläche zur Anbindung an ein Gehäuse aufweist, das Thermostatventil ein Halteelement aufweist, durch welches es an der Abschlussfläche mindestens teilweise flächenbündig angebracht wird, so dass das Halteelement die Abschlussfläche in Radialrichtung zumindest teilweise überragt, umfassend die Schritte: Anbringen eines Dichtungsrings an der radialen Außenwand und Einsetzen des Thermostatventils in den Thermostatdeckel, so dass der Dichtungsring in Axialrichtung zwischen dem Anschlussflansch und dem Halteelement verliersicher angeordnet wird.

Durch das Verfahren wird ein Integralthermostat als vormontierte Baugruppe geschaffen, an welchem ein Dichtungsring zur Abdichtung des Thermostaten gegen ein Gehäuse verliersicher angebracht ist.

Weitere Vorteile der Erfindung ergeben sich aus der nachfolgenden Beschreibung von Ausführungsbeispielen der Erfindung, die in den Zeichnungen schematisch dargestellt sind. Für gleiche oder ähnliche Bauteile werden in den Zeichnungen einheitliche Bezugszeichen verwendet. Sämtliche aus den Ansprüchen, der Beschreibung oder den Zeichnungen hervorgehende Merkmale und/oder Vorteile, einschließlich konstruktive Einzelheiten, räumliche Anordnungen und Verfahrensschritte, können sowohl für sich als auch in den verschiedensten Kombinationen erfindungswesentlich sein. Als Teil eines Ausführungsbeispiels beschriebene oder dargestellte Merkmale können ebenso in einem anderen Ausführungsbeispiel verwendet werden, um eine weitere Ausführungsform der Erfindung zu erhalten.

In den Zeichnungen zeigen:
- Fig. 1:: eine Schnittansicht eines Ausschnitts eines Integralthermostaten umfassend einen Thermostatdeckel und ein Thermostatventil gemäß einem ersten Ausführungsbeispiel der Erfindung;
- Fig. 2:: eine Unteransicht des Integralthermostaten gemäß Fig. 1;
- Fig. 3:: eine Schnittansicht eines Ausschnitts des Integralthermostaten gemäß Fig. 1, montiert an ein Motorgehäuse;
- Fig. 4:: eine Schnittansicht eines Ausschnitts eines Integralthermostaten umfassend einen Thermostatdeckel und ein Thermostatventil gemäß einem zweiten Ausführungsbeispiel der Erfindung;
- Fig. 5:: eine Unteransicht des Integralthermostaten gemäß Fig. 4 und
- Fig. 6:: eine Schnittansicht eines Ausschnitts des Integralthermostaten gemäß Fig. 4, montiert an ein Gehäuse.

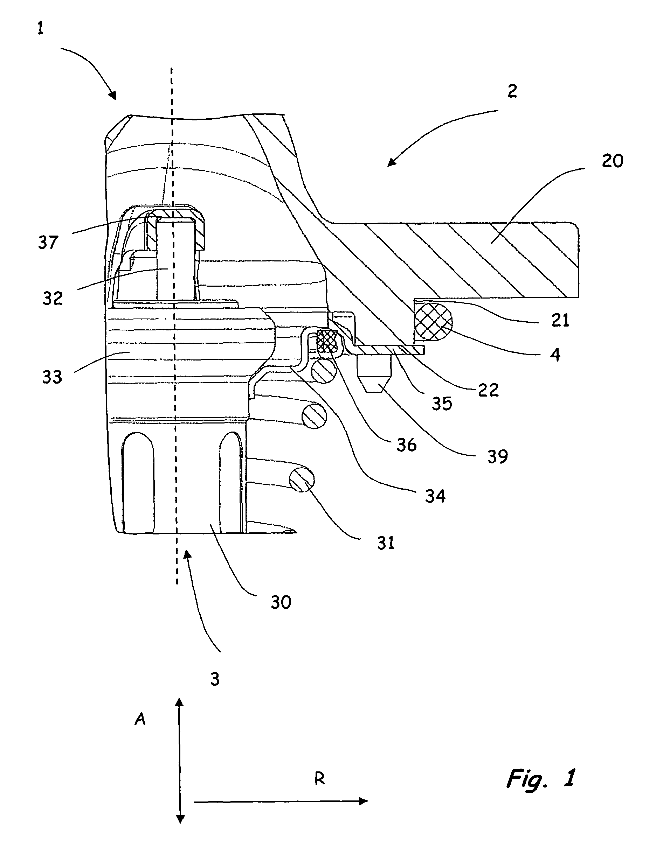

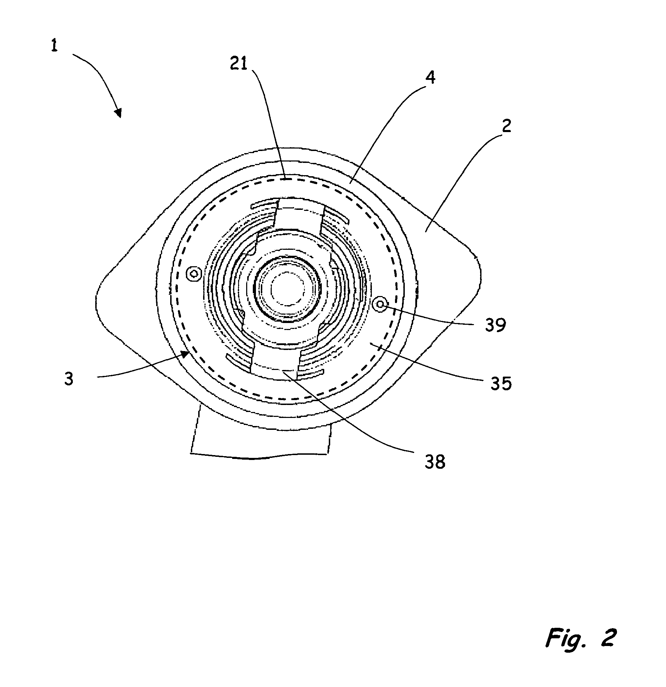

Fig. 1 und 2 zeigen schematisch einen Integralthermostaten 1 umfassend einen Thermostatdeckel 2 und ein darin eingesetztes Thermostatventil 3, wobei Fig. 1 einen Teil des Integralthermostaten 1 in einer geschnittenen Darstellung und Fig. 2 eine Unteransicht des Integralthermostaten zeigt.

Wie in Fig. 1 erkennbar, weist der vorzugsweise aus Kunststoff hergestellte Thermostatdeckel 2 einen gestuften Anschlussflansch 20 zur Anbindung an ein in Fig. 1 nicht dargestelltes Gehäuse, beispielsweise ein Gehäuse eines Motors, auf. An einer radialen Außenwand 21 einer Stufe des Anschlussflansches 20 ist ein Dichtungsring 4 angebracht. An die Außenwand 21 schließt die Abschlussfläche 22 in einem rechten Winkel an.

Das Thermostatventil 3 umfasst ein Gehäuse 30 mit darin eingefülltem Dehnstoff, insbesondere eine Wachsmischung, der temperaturabhängig gegen die Kraft einer Feder 31 einen Arbeitskolben 32 austreibt. Das Gehäuse 30 weist einen Ringbund 33 auf, an welchem ein ringscheibenförmiger Ventilteller 34 angeordnet ist. Das Thermostatventil 3 umfasst weiter eine Grundplatte 35, die als Ventilsitz für den Ventilteller 34 dient. Die Grundplatte 35 liegt mit einem Randbereich flächenbündig an der Abschlussfläche 22 an. An dem Ventilteller 34 ist im Bereich des Ventilsitzes ein Dichtelement 36 vorgesehen. Der Arbeitskolben 32 des Thermostatventils 3 stützt sich in dem dargestellten Ausführungsbeispiel beim Austreiben gegen ein Abstützelement 37 ab, welches in der dargestellten Ausführungsform einteilig mit der Grundplatte 35 als ein Grundkörper gestaltet ist. Die Feder 31 ist mit einem Ende gegen den Ventilteller 34 abgestützt, und zwingt diesen dadurch gegen die als Ventilsitz dienende Grundplatte 35. Das zweite, nicht dargestellte Ende der Feder 31 ist gegen eine Traverse abgestützt, die mit der Grundplatte 35 mittels in Fig. 2 dargestellten Armen 38 verbunden ist.

Das Thermostatventil 3 und der Thermostatdeckel 2 sind mittels die Grundplatte durchdringende Zapfen 39 kraft- und/oder formschlüssig miteinander verbunden, so dass der Integralthermostat 1 als Baugruppe vormontiert werden kann. Die Grundplatte 35 und die an dieser angebrachte Traverse mit den Armen 38 sowie das Abstützelement 37 sind dabei ortsfest an dem Thermostatdeckel 2 angebracht.

Erfindungsgemäß ist ein Außendurchmesser der Grundplatte 35 größer als ein Außendurchmesser der Außenwand 21, so dass die Grundplatte 35 die Abschlussfläche 22 in Radialrichtung R des Thermostatventils 3 zumindest teilweise überragt. Dadurch wird der Dichtungsring 4 in Axialrichtung A des Thermostatventils 3 zwischen dem Thermostatdeckel 2 und dem Thermostatventil 3 gesichert.

Wie in Fig. 2 erkennbar, wird zunächst der Dichtungsring 4 auf den Thermostatdeckel 2 angeordnet und anschließend das Thermostatventil 3 an dem Thermostatdeckel 2 montiert, so dass eine vormontierte Baugruppe geschaffen wird. Die Grundplatte 35 des Thermostatventils 3 überragt dabei eine gestrichelt dargestellte radiale Außenfläche 22 des Thermostatdeckels 2, so dass der auf der Außenwand 21 angebrachte Dichtungsring 4 in Axialrichtung gesichert wird.

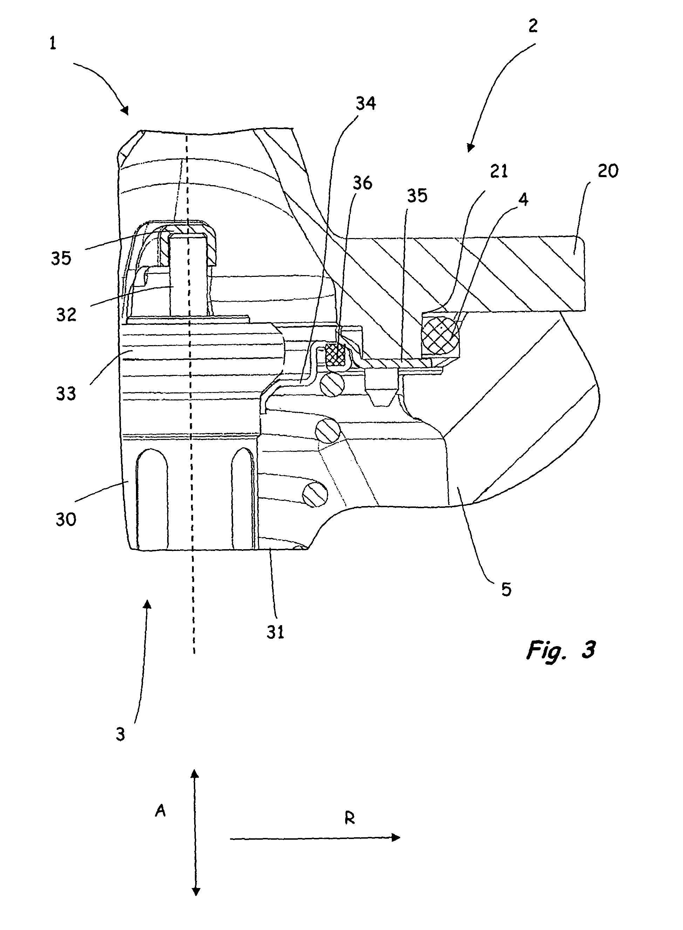

Fig. 3 zeigt den Integralthermostaten 1 gemäß Fig. 1 und 2, welcher an ein Motorgehäuse 5 angebracht ist. Wie in Fig. 3 erkennbar, ist der Dichtungsring 4 in dem montierten Zustand gemäß Fig. 3 in Axialrichtung zwischen der Grundplatte 35 und dem Thermostatdeckel 2 und in Radialrichtung R zwischen der Außenwand 21 des Thermostatdeckels 2 und einem Innendurchmesser des Motorgehäuses 5 gesichert.

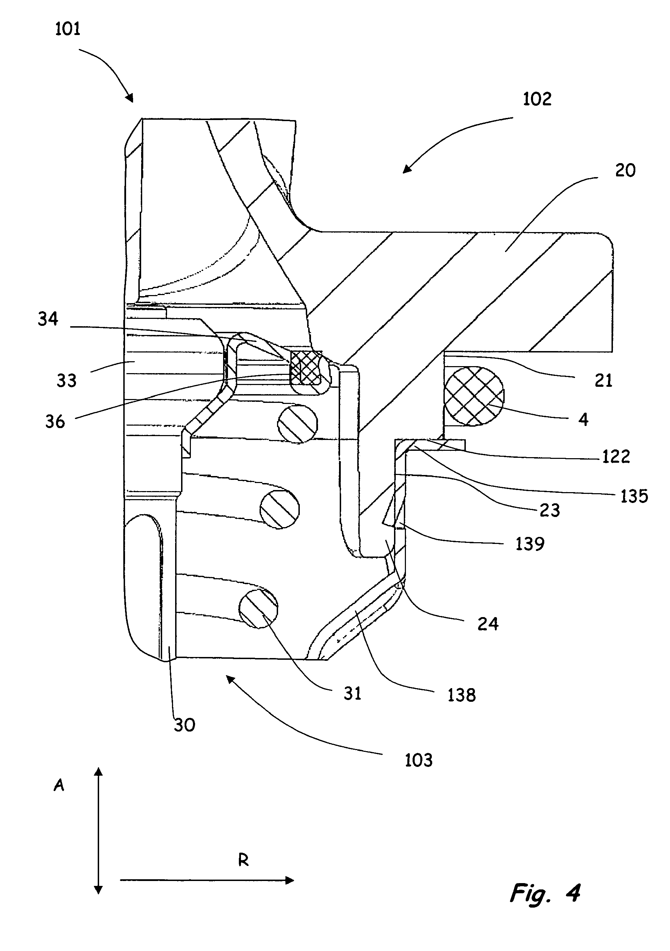

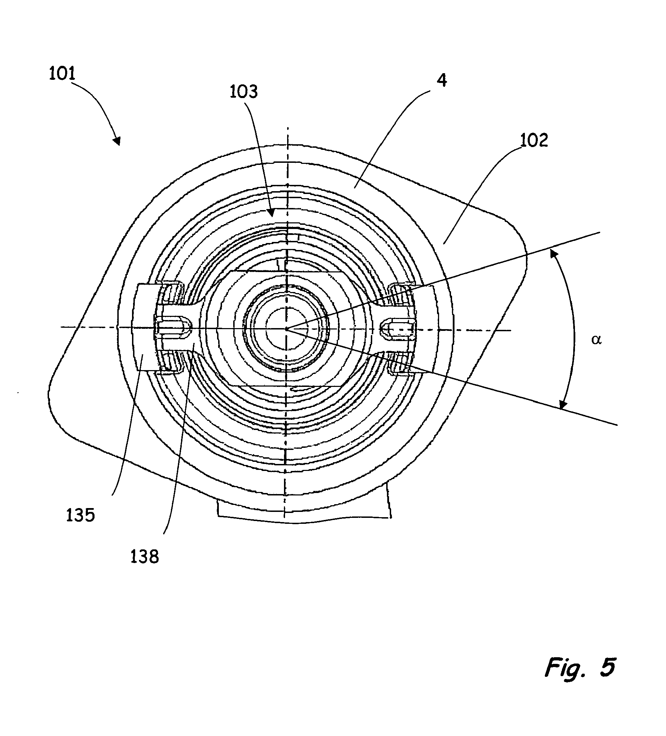

Fig. 4 und 5 zeigen schematisch einen Integralthermostaten 101 umfassend einen Thermostatdeckel 102 und einen darin eingesetztes Thermostatventil 103 gemäß einem zweiten Ausführungsbeispiel der Erfindung, wobei Fig. 4 einen Teil des Integralthermostaten 101 in einer geschnittenen Darstellung und Fig. 5 eine Unteransicht des Integralthermostaten 101 zeigt. Der Integralthermostat 101 entspricht im Wesentlichen dem Integralthermostaten 1 gemäß Fig. 1 und für gleiche Bauteile werden einheitliche Bezugszeichen verwendet. Auf eine detaillierte Beschreibung dieser Bauteile wird verzichtet.

Ein in Fig. 4 nicht dargestellter Arbeitskolben des Thermostatventils 103 stützt sich beim Austreiben aus dem Gehäuse 30 gegen den Thermostatdeckel 102 ab. Ebenso dient der Thermostatdeckel 102 als Ventilsitz für den Ventilteller 34. Das Thermostatventil 103 ist mittels einer Haltetraverse 135 an dem Thermostatdeckel 102 befestigt. Der Thermostatdeckel 102 weist zu diesem Zweck eine zweite Stufe mit einer zweiten radialen Außenwand 23 auf, wobei die zweite radiale Außenwand 23 und der Haltetraverse 135 zueinander komplementäre Rastmittel 24, 139 für eine Verrastung aufweisen. Die Haltetraverse 135 bildet ein Widerlager für die Feder 31. Die Haltetraverse 135 ist an einer Abschlussfläche 122 des Anschlussflansches 20 angeordnet, wobei die Haltetraverse 135 die Abschlussfläche 122 zumindest teilweise überragt. Der an der Außenwand 21 angebrachte Dichtungsring 4 wird somit durch den Außenflansch 20 und die Haltetraverse 135 in Axialrichtung A gesichert.

Fig. 5 zeigt eine Unteransicht des Integralthermostaten 101 gemäß Fig. 4. Das Thermostatventil 103 ist über die Haltetraverse 135 an dem Thermostatdeckel 102 gesichert, so dass der Integralthermostat 101 als eine Baugruppe vormontiert werden kann. Die Haltetraverse 135 überragt dabei eine in Fig. 5 verdeckte Außenwand des Thermostatdeckels 102, an welcher der Dichtungsring 4 angebracht ist, so dass der Dichtungsring 4 in Axialrichtung zwischen dem Thermostatdeckel 102 und der Haltetraverse 135 gesichert ist.

Wie in Fig. 5 erkennbar ist, wird durch die Haltetraverse 135 kein um 360° umlaufender Überstand geschaffen. Vielmehr wird ein Überstand an zwei sich gegenüberliegenden Stellen geschaffen, welcher jeweils in Umfangsrichtung über einen Winkel α reicht. Der Winkel α des durch die Haltetraverse 135 geschaffenen Überstands ist dabei variabel und hängt von einer Gestaltung der Haltetraverse 135 ab.

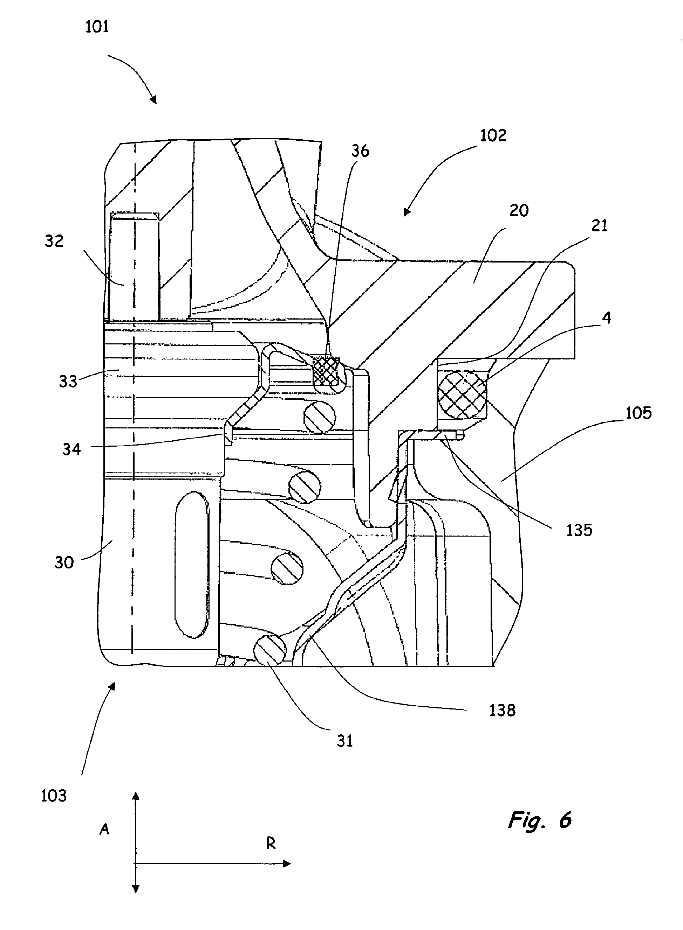

Fig. 6 zeigt den Integralthermostaten 101 gemäß Fig. 4, welcher an ein Motorgehäuse 105 angebracht ist. Der Dichtungsring 4 ist dabei in Radialrichtung R zwischen der Außenwand 21 und dem Motorgehäuse 105 gesichert.

## Patentansprüche

1. Integralthermostat umfassend einen Thermostatdeckel (2) mit einem gestuften Anschlussflansch (20) zur Anbindung an ein Gehäuse und ein in den Thermostatdeckel (2) eingesetztes Thermostatventil (3), wobei ein Dichtungsring (4) an einer radialen Außenwand (21) einer Stufe des Anschlussflanschs (20) anbringbar ist und das Thermostatventil (3) ein Halteelement (35, 135) aufweist, mittels welchem es an dem Thermostatdeckel (2) befestigbar ist,
**dadurch gekennzeichnet, dass**
das Halteelement (35, 135) an einer an die radiale Außenwand (21) anschließenden Abschlussfläche (22, 122) des Anschlussflansches (20) mindestens teilweise flächenbündig anliegt und
das Halteelement (35, 135) die Abschlussfläche (21) in Radialrichtung (R) zumindest teilweise überragt, so dass ein angebrachter Dichtungsring (4) in Axialrichtung zwischen dem Anschlussflansch (20) und dem Halteelement (35, 135) sicherbar ist.

2. Integralthermostat nach Anspruch 1, **dadurch gekennzeichnet, dass** das Halteelement (35, 135) und der Thermostatdeckel (2, 102) komplementäre Rastmittel (24, 139) aufweisen.

3. Integralthermostat nach Anspruch 1 oder 2, **dadurch gekennzeichnet, dass** das Halteelement eine Grundplatte (35) umfasst, welche einen Ventilsitz für einen Ventilteller (34) des Thermostatventils (3) bildet.

4. Integralthermostat nach Anspruch 3, **dadurch gekennzeichnet, dass** die Grundplatte (35) ringscheibenförmig ausgestaltet ist.

5. Integralthermostat nach Anspruch 1 oder 2, **dadurch gekennzeichnet, dass** das Haltemittel als Haltetraverse (135) ausgeformt ist.

6. Verfahren zur Herstellung eines Integralthermostaten (1, 101) umfassend einen Thermostatdeckel (2, 102) und ein darin eingesetztes Thermostatventil (3, 103) gemäß einem der Ansprüche 1 bis 5, wobei der Thermostatdeckel (2, 102) einen gestuften Anschlussflansch (20) mit einer radialen Außenwand (21) und einer an die radiale Außenwand (21) anschließenden Abschlussfläche (22, 122) zur Anbindung an ein Gehäuse (5, 105) aufweist, das Thermostatventil (3, 103) ein Halteelement (35, 135) aufweist, durch welches es an der Abschlussfläche (2) mindestens teilweise flächenbündig angebracht wird, so dass das Halteelement (35, 135) die Abschlussfläche (22) in Radialrichtung (R) zumindest teilweise überragt, umfassend die Schritte:
a. Anbringen eines Dichtungsrings (4) an der radialen Außenwand (21) und
b. Einsetzen des Thermostatventils (3, 103) in den Thermostatdeckel (2, 102), so dass der Dichtungsring (4) in Axialrichtung zwischen dem Anschlussflansch (20) und dem Halteelement (35, 135) verliersicher angeordnet wird.
